(19) Europäisches Patentamt / European Patent Office / Office européen des brevets

(11) **EP 3 876 389 A1**

(12) **EUROPEAN PATENT APPLICATION**

(43) Date of publication:
08.09.2021 Bulletin 2021/36

(51) Int Cl.:
*H02J 50/12* ^(2016.01)    *H02J 50/80* ^(2016.01)

(21) Application number: 21160611.6

(22) Date of filing: 04.03.2021

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 05.03.2020  US 202062985348 P
01.03.2021  US 202117188552

(71) Applicant: **Powermat Technologies Ltd.**
**Petach Tikva 4970602 (IL)**

(72) Inventors:
• **SHERMAN, Itay**
**4970602 Petach Tikva (IL)**
• **MACH, Elieser**
**4970602 Petach Tikva (IL)**

(74) Representative: **Maiwald Patent- und Rechtsanwaltsgesellschaft mbH**
**Elisenhof**
**Elisenstraße 3**
**80335 München (DE)**

(54) **DYNAMIC RESONANCE FOR WIRELESS POWER SYSTEMS**

(57)    A wireless power transmitter (101) is provided herein. The wireless power transmitter executes in-band communication with a power receiver (102). The power transmitter receives a reported voltage from the power receiver and dynamically determines a coupling between the power transmitter and the power receiver from the reported voltage. The power transmitter also dynamically determines an operating frequency for power transmission between the power transmitter and the power receiver that produces a minimal swing of rectified voltages for a range of loads (105).

FIG. 1

**Description**

PRIORITY CLAIM

This application claims priority from U.S. Provisional Patent Application Ser. No. 62/985,348, entitled "DYNAMIC RESONANCE WIRELESS POWER SYSTEM DESIGN," which is hereby incorporated by reference as if set forth in full in this application for all purposes.

BACKGROUND

The disclosure relates generally to wireless power systems, and more specifically, to dynamic resonance for wireless power systems.

In general, contemporary implementations of wireless power transfer methods provide for power transfer between a power transmitter (Tx) and a power receiver (Rx). For example, contemporary implementations use induction to transfer magnetic energy from a coil of the Tx to a coil of the Rx. In some contemporary implementations (e.g., named an "inductive system"), a wireless power transfer system includes resonance circuits on both the Tx and the Rx. Operationally, the Tx provides a power carrier signal at a frequency that is higher than a system joint resonance frequency. In other contemporary implementations (e.g., named a "resonant system"), a wireless power transfer system provides a fixed power carrier frequency and tunes circuits therein to match (or closely match) a system joint resonance frequency to a power carrier frequency.

Both the inductive and resonant systems show a change on a rectified voltage (Vrect) of the Rx when a load is switched. Yet, in contemporary implementations, the Vrect has limits on allowable values. If Vrect is too low a value, the Rx might not work. While, if Vrect is too high a value, electronics of the Rx may be damaged. Also, contemporary implementations that have been tuned to provide a correct Vrect when load is active may suffer major increases in Vrect if the loads are switched off. Similarly, contemporary implementations that have correct Vrect when the loads are switched off may suffer major decreases in Vrect if the loads are switched on. In some cases, this Vrect drop may even cause a reset to a circuit of the Rx.

Thus, tradeoffs are present between the inductive systems, which have smaller voltage swings between loaded and unloaded states, and the resonant systems, which have better efficiency of the power transfer, in contemporary implementations. Given the tradeoffs, there is a need to provide wireless power systems that capture the benefits of both inductive and resonant systems.

SUMMARY

According to one embodiment, a power transmitter is provided. The power transmitter executes in-band communication with a power receiver. The power transmitter receives a reported voltage from the power receiver and dynamically determines a coupling between the power transmitter and the power receiver from the reported voltage. The power transmitter also dynamically determines an operating frequency for power transmission between the power transmitter and the power receiver

According to one or more embodiments, the power transmitter embodiment above can be provided can be implemented as a system, a method, an apparatus, or a computer program product, along with as a power receiver.

Additional features and advantages are realized through the techniques of the present disclosure. Other embodiments and aspects of the disclosure are described in detail herein. For a better understanding of the disclosure with the advantages and the features, refer to the description and to the drawings.

BRIEF DESCRIPTION OF THE SEVERAL VIEWS OF THE DRAWINGS

The subject matter is particularly pointed out and distinctly claimed in the claims at the conclusion of the specification. The forgoing and other features, and advantages of the embodiments herein are apparent from the following detailed description taken in conjunction with the accompanying drawings in which:

    FIG. 1 shows a block diagram depicting a system in accordance with one or more embodiments;
    FIG. 2 shows a block diagram depicting a system in accordance with one or more embodiments;
    FIG. 3 depicts a method of a system in accordance with one or more embodiments;
    FIG. 4 depicts a method of a system in accordance with one or more embodiments; and
    FIG. 5 shows a graph in accordance with one or more embodiments.

DETAILED DESCRIPTION

Embodiments disclosed herein may include apparatuses, systems, methods, and/or computer program products (generally discussed herein as a system) that provide for a power transmitter (Tx) to dynamically determine a resonance for the system.

Operations at a resonance frequency provides the best efficiency for the system. But, as noted herein, contemporary implementations of wireless power transfer methods have shortcomings and tradeoffs when trying to achieve the best efficiency. For example, maintenance of an accurate matching point is a resonant system is problematic, especially in realistic systems in which vital parameters such as the inductance and/or coupling between Tx and Rx is unknown or depend on user intervention. More particularly, contemporary implementations of wireless power transfer methods include at least a Tx self-resonance (e.g., in the absence of the Rx) that is dominated mainly by the inductance of the Tx coil along with the capacitance of a relevant capacitor, a Rx self-resonance (e.g., in the absence of the Tx) that is dominated mainly by the inductance of the Rx coil along with the capacitance of a relevant capacitor, and a system joint resonance created by coupling between the Tx and the Rx. The system joint resonance depends on the individual resonance frequencies of the Tx and the Rx, the coupling therebetween, and the load on the Rx. A first order resonance frequency depends on Equation 1, where L is the inductance of the relevant coil (in the absence of the counterpart) and C is the capacitance of the relevant capacitor.

$$ fre = \frac{1}{2\pi\sqrt{LC}} \qquad\qquad \text{Equation 1} $$

For a given system setup with defined resonance circuits and a specific coupling, a change in the system joint resonance is observed when there is a change a system load. In this regard, both inductive and resonant systems show a change on a receiver rectified voltage (e.g., Vrect) when the load is switched, which illustrates the tradeoffs between the inductive systems and the resonant systems as described herein.

Given these tradeoffs, the system disclosed herein captures the benefits of both inductive and resonant systems by dynamically determining a resonance for the system. More particularly, the system leverages an inductive operation (e.g., using something other than resonance) and resonance operation (e.g., using exact resonance frequency based on the coil and the inductor). For instance, when the system knows minimal and maximal load conditions, the system can determine an operational frequency at which a Vrect of the system remains the same for both the minimal and maximal loads for every coupling condition (e.g., a distance between of the system the Tx and the Rx). In some cases, a difference in a phase between a voltage and a current in a resonant tank may be present. In turn, a specific frequency can be found empirically by scanning all operational frequency of a range or can be calculated or simulated based on a circuit response. According to one or more advantages, technical effects, and benefits, because frequency tends to be close to a joint resonance frequency when a high load is active, the system optimizes efficiency when load is active by selecting such a frequency, while minimizing aa voltage swing when load is activated or removed. Thus, embodiments described herein are necessarily rooted in one or more controllers of the Tx and Rx of the system to perform proactive operations (e.g., scanning empirically for and/or calculating/simulating specific frequency) to overcome problems specifically arising in the contemporary implementations of wireless power transfer methods.

According to one or more embodiments, a power transmitter is disclosed. The power transmitter execute inband communication with a power receiver. The power transmitter is configured to receive a reported voltage from the power receiver, dynamically determine a coupling between the power transmitter and the power receiver from the reported voltage, and dynamically determine an operating frequency for power transmission between the power transmitter and the power receiver.

According to one or more embodiments of the power transmitter or in combination with one or more of the power transmitter embodiments described herein, the power transmitter can be further configured to determine a ping that causes a local voltage in the power receiver, the reported voltage corresponding to the local voltage.

According to one or more embodiments of the power transmitter or in combination with one or more of the power transmitter embodiments described herein, the power transmitter can comprise a coil, and the ping can be transferred from the transmitter coil to a coil of the power receiver to generate the local voltage at a rectifier of the power receiver.

According to one or more embodiments of the power transmitter or in combination with one or more of the power transmitter embodiments described herein, the ping from the power transmitter produces a sinusoidal wave on the coil of the power transmitter that causes the power receiver to generate the local voltage out of the rectifier in the power receiver, and a frequency of the sinusoidal wave can create enough energy on the power receiver to cause the local voltage.

According to one or more embodiments of the power transmitter or in combination with one or more of the power transmitter embodiments described herein, the power transmitter can comprise a controller and/or the power receiver can comprise a controller.

According to one or more embodiments of the power transmitter or in combination with one or more of the power transmitter embodiments described herein, the ping can be selected by the controller from one or more coded pings there within.

According to one or more embodiments of the power transmitter or in combination with one or more of the power transmitter embodiments described herein, the dynamic determinations of the coupling and the operating frequency can be active real-time determinations by the controller.

According to one or more embodiments of the power transmitter or in combination with one or more of the power transmitter embodiments described herein, the dynamic determination of the coupling can be based on a coupling factor identifying a distance between the power receiver and the power transmitter.

According to one or more embodiments of the power transmitter or in combination with one or more of the power transmitter embodiments described herein, the power transmitter can utilize a look-up table to correlate the reported voltage with the coupling factor.

According to one or more embodiments of the power transmitter or in combination with one or more of the power transmitter embodiments described herein, the dynamic determination of the coupling can be based on simulating distance conditions based on the reported voltage.

According to one or more embodiments of the power transmitter or in combination with one or more of the power transmitter embodiments described herein, the dynamic determination of the operating frequency can select a frequency that guarantees stability between the power receiver and the power transmitter.

According to one or more embodiments of the power transmitter or in combination with one or more of the power transmitter embodiments described herein, the operating frequency can minimize interference of load switches at the power receiver.

According to one or more embodiments of the power transmitter or in combination with one or more of the power transmitter embodiments described herein, the dynamic determination of the operating frequency can select a frequency at a joint resonance frequency when a highest load is set to a predefined value.

According to one or more embodiments of the power transmitter or in combination with one or more of the power transmitter embodiments described herein, the operating frequency can be selected at a frequency that produces a minimal swing of rectified voltages for a range of loads.

According to one or more embodiments of the power transmitter or in combination with one or more of the power transmitter embodiments described herein, the power transmitter can maintain a fixed operational point through an operation time.

According to one or more embodiments, a power receiver is disclosed. The power receiver executing in-band communication with a power transmitter. The power receiver is configured to receive a ping that causes a local voltage in the power receiver, report the local voltage as a reported voltage to the power transmitter to cause a dynamic determination of a coupling between the power transmitter and the power receiver from the reported voltage and a dynamic determination of an operating frequency for power transmission between the power transmitter and the power receiver.

According to one or more embodiments of the power receiver or in combination with one or more of the receiver transmitter embodiments described herein, the power transmitter can be further configured to determine the ping that causes the local voltage in the power receiver.

According to one or more embodiments of the power receiver or in combination with one or more of the receiver transmitter embodiments described herein, the ping can be transferred from a coil of the power transmitter to a coil of the power receiver to generate the local voltage at a rectifier of the power receiver.

According to one or more embodiments of the power receiver or in combination with one or more of the receiver transmitter embodiments described herein, the ping produces a sinusoidal wave on the coil of the power transmitter that causes the power receiver to generate the local voltage out of the rectifier in the power receiver, and a frequency of the sinusoidal wave can create enough energy on the power receiver to cause the local voltage.

According to one or more embodiments of the power receiver or in combination with one or more of the receiver transmitter embodiments described herein, the power transmitter can comprise a controller and/or the power receiver can comprise a controller.

According to one or more embodiments of the power receiver or in combination with one or more of the receiver transmitter embodiments described herein, the ping can be selected by the controller from one or more coded pings there within.

According to one or more embodiments of the power receiver or in combination with one or more of the receiver transmitter embodiments described herein, the dynamic determinations of the coupling and the operating frequency can be active real-time determinations by the controller.

According to one or more embodiments of the power receiver or in combination with one or more of the receiver transmitter embodiments described herein, the dynamic determination of the coupling can be based on a coupling factor identifying a distance between the power receiver and the power transmitter.

According to one or more embodiments of the power receiver or in combination with one or more of the receiver transmitter embodiments described herein, the power transmitter can utilize a look-up table to correlate the reported voltage with the coupling factor.

According to one or more embodiments of the power receiver or in combination with one or more of the receiver transmitter embodiments described herein, the dynamic determination of the coupling can be based on simulating distance conditions based on the reported voltage.

According to one or more embodiments of the power receiver or in combination with one or more of the receiver transmitter embodiments described herein, the dynamic determination of the operating frequency can select a frequency that guarantees stability between the power receiver and the power transmitter.

According to one or more embodiments of the power receiver or in combination with one or more of the receiver transmitter embodiments described herein, the operating frequency can minimize interference of load switches at the power receiver.

According to one or more embodiments of the power receiver or in combination with one or more of the receiver transmitter embodiments described herein, the dynamic determination of the operating frequency can select a frequency at a joint resonance frequency when a highest load is set to a predefined value.

According to one or more embodiments of the power receiver or in combination with one or more of the receiver transmitter embodiments described herein, the operating frequency can be selected at a frequency that produces a minimal swing of rectified voltages for a range of loads.

According to one or more embodiments of the power receiver or in combination with one or more of the receiver transmitter embodiments described herein, the power transmitter can maintain a fixed operational point through an operation time.

According to one or more embodiments, a system that includes any of the power receivers and/or the power transmitters described herein is provided. Further, according to one or more embodiments, operations of the system, the power transmitter, and/or the power transmitters can be provided can be implemented as a method or a computer program product.

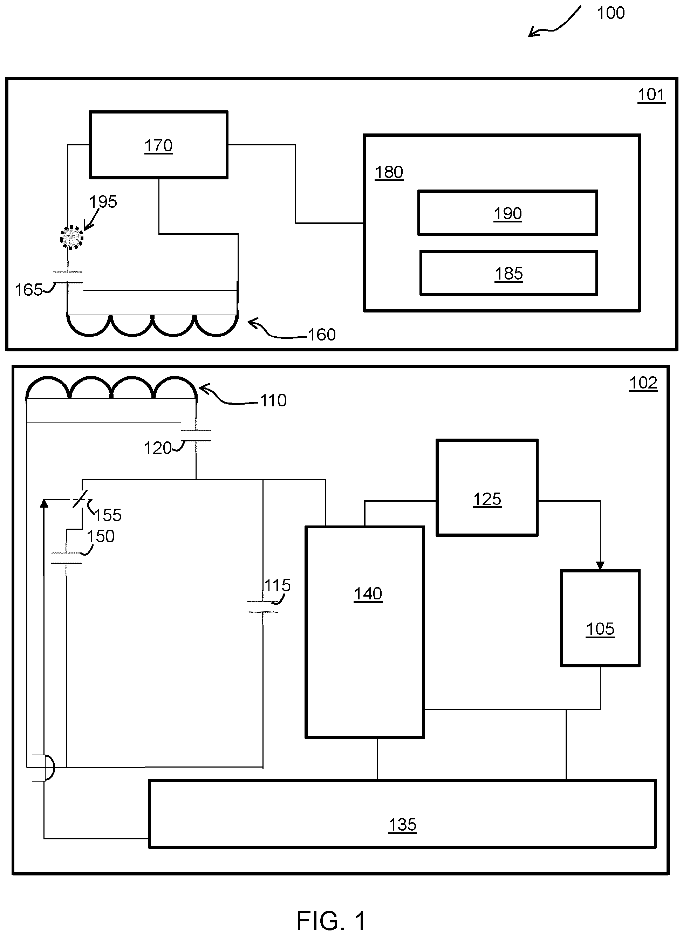

FIG. 1 shows a block diagram depicting a system 100 in accordance with one or more embodiments. The system comprises a power transmitter 101 and a power receiver 102 (referred herein as Tx 101 and Rx 102, respectively). The Tx 101 is any device that can generate electromagnetic energy to a space around the Tx 101 that is used to provide power to the Rx 102. The Rx 102 is any device that can receive, use, and/or store the electromagnetic energy when present in the space around the Tx 101. Note that the Tx 101 can have a similar or the same component structure as the Rx 102, and vice versa.

As shown in FIG. 1, the Rx 102 includes circuitry for receiving and storing the electromagnetic energy, such as a load 105. The circuitry of the Rx 102 may also include a resonance coil 110; a parallel resonance capacitor (capacitor) 115; a serial resonance capacitor (capacitor) 120; a switch 125; a controller 135; and a rectifier 140. In accordance with some example embodiments, the Rx 102 may be used to wirelessly obtain induced power from the Tx 101 for supplying power to a load 105. For example, the Rx 102 may be used for charging the load 105, examples of which include handheld battery, a power supply, a combination thereof, and the like. Additionally, the Rx 102 may be capable of wirelessly communication with the Tx 101 (e.g., in-band communication). According to one or more embodiments, a resonate section (circuit) of the Rx 102 can include the coil 110 covered with ferrite, the capacitor 120, and the capacitor 115, a power-supply section of the Rx 102 can include the rectifier 140, the load 105, and the switch 125, and a control and communication section of the Rx 102 can include the controller 135.

The values of the resonance circuit components are defined to match with a transmitted frequency of the Tx 101. The Rx 102 can be provided with or without the capacitor 115. Additionally, or alternatively, the resonance circuit can further comprise at least one branch each having a tuning capacitor (rcap) 150 and a switch 155 controlled by the controller 135.

According to one or more embodiments, the controller 135 can include software therein (e.g., firmware 159) that logically provides a FIR equalizer, an analyzer of in-band communication data, a selector for selecting a ping, a coupler for dynamically determining a coupling factor, a regulator for dynamically determining an operating frequency, etc. In this regard, the controller 135 can have a system memory where software and a processor that executes the software in place to implement operations described herein. Further, the controller 135 can toggle the switch 155, of the at least one branch, to engage the branch reap 150 as an additional parallel capacitor that can alter the resonance frequency of the resonance circuit, thus changing the operational point of the system 100.

The rectifier 140 of the power supply section can be utilized for converting alternating current (AC) voltage attained by the resonance circuit to direct current (DC) voltage. The rectifier 140 can be based on commercially available half-wave rectification; full-wave rectification; controlled (e.g., field-effect transistor -based of FET based) full-wave rectification; and any combination thereof, or the like. According to one or more embodiments, the rectifier 140 can be any rectifier using one or more components, such as 4 diodes (e.g., asynchronous rectifier), 2 didoes and 2 FETs (half synchronous), 4FET (synchronous), or 2 capacitors and 2 switches, that are controlled by either a dedicated logic circuit or the controller 135.

The controller 135 can include a central processing unit (CPU) based on a microprocessor, an electronic circuit, an integrated circuit, and/or implemented as special firmware ported to a specific device such as a digital signal processor, an application specific integrated circuit, and any combination thereof, or the like. According to one or more embodiments, the controller 135 can be utilized to perform computations required by the Rx 102 or any of the circuitry therein.

Similar to the Rx 102, the Tx 101 includes circuitry for generating and transmitting the electromagnetic energy (e.g., transmitting power). The circuitry of the Tx 101 may include a coil 160; a capacitor 165; a driver 170; and a controller 180, which further include an input/output (I/O) module 185 and firmware 190. The coil 160 and the capacitor 165 provide an LC circuit for generating an inductive current in accordance with operations of the driver 165 and the controller 180 to support power transmissions.

According to one or more embodiments, the controller 180 may utilize the I/O module 185 as an interface to transmit and/or receive information and instructions between the controller 180 and elements of the Tx 101 (e.g., such as the driver 170 and a wiring junction 195). Note that the controllers 135 and 180 can be similarly configured.

According to one or more embodiments, the controller 180 may sense, through the I/O module 185 one or more currents or voltages, such as a DC input voltage (Vin) and a DC output voltage (Vout). According to one or more embodiments, the controller 180 can activate, through the I/O module 185, one or more switches to change the resonance frequency. For example, with respect to the Rx 102, the controller 135 can activate the switch 155 to add the capacitor 150 in parallel to the resonance circuit, thus adding the equivalent capacitance of the at least one capacitor, which subsequently alters the resonance frequency. Further, the Rx 102 and/or the Tx 101 can include multiple switches for multiple frequencies.

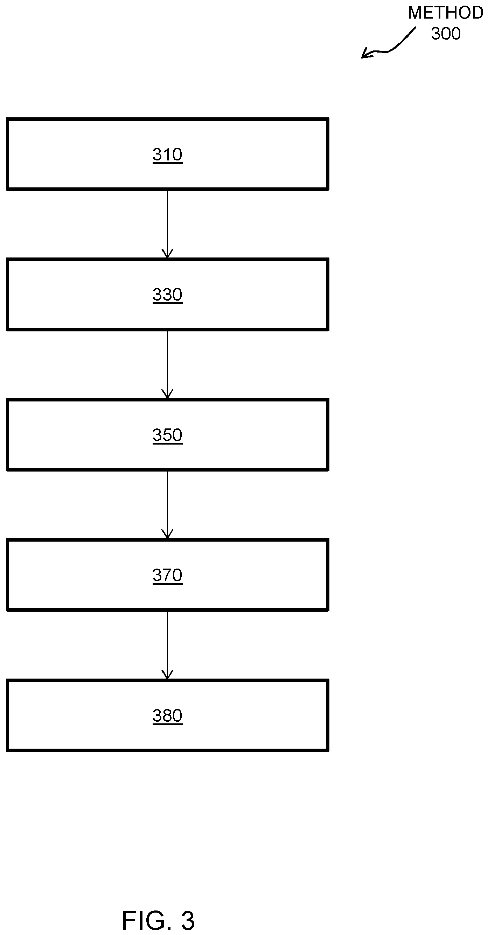

According to one or more embodiments, the controller 180 may utilize the firmware 190 as a mechanism to operate and control operations of the Tx 101. In this regard, the controller 180 can be a computerized component or a plurality of computerized components adapted to perform methods such as depicted in FIGS. 3-4. For example, the controller 135 can include a computer program product that stores a computer readable storage medium (e.g., implementing methods such as depicted in FIGS. 3-4). According to one or more embodiments, the controller 135 and 180 can also cause the system to participate in in-band communications.

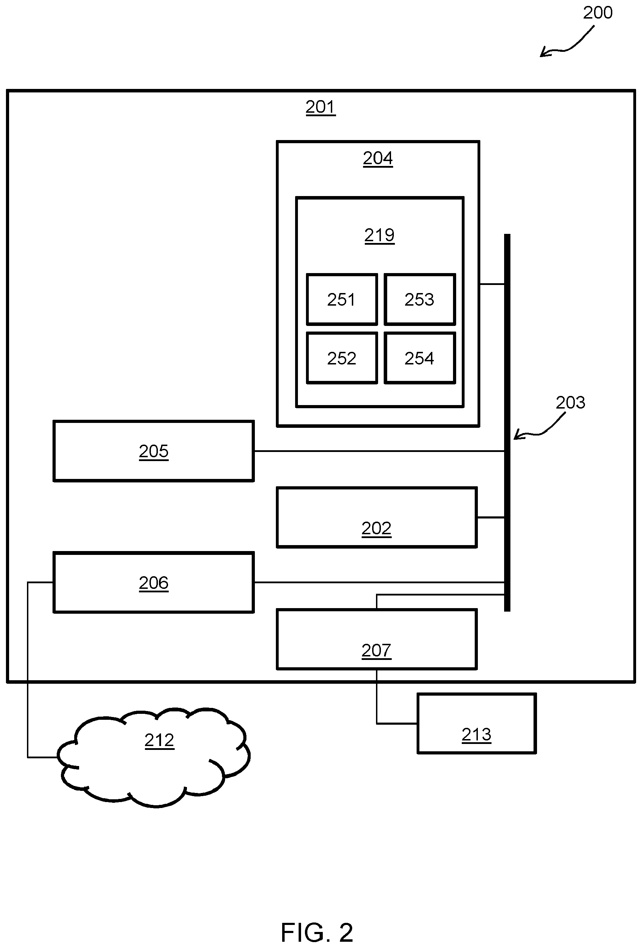

FIG. 2 depicts an example of a system 200 in accordance with one or more embodiments. The system 200 has a device 201 (e.g., the Rx 102 and/or the Tx 101 of the system 100 of FIG. 1) with one or more central processing units (CPU(s)), which are collectively or generically referred to as processor(s) 202 (e.g., the controllers 135 and 180 of FIG. 1). The processors 202, also referred to as processing circuits, are coupled via a system bus 203 to system memory 204 and various other components. The system memory 204 can include a read only memory (ROM), a random access memory (RAM), internal or external Flash memory, embedded static-RAM (SRAM), and/or any other volatile or non-volatile memory. For example, the ROM is coupled to the system bus and may include a basic input/output system (BIOS), which controls certain basic functions of the device 201, and the RAM is read-write memory coupled to the system bus 203 for use by the processors 202.

FIG. 2 further depicts an I/O adapter 205, a communications adapter 206, and an adapter 207 coupled to the system bus 203. The I/O adapter 205 may be a small computer system interface (SCSI) adapter that communicates with a drive and/or any other similar component. The communications adapter 206 interconnects the system bus 203 with a network 212, which may be an outside network (power or otherwise), enabling the device 201 to communicate data and/or transfer power with other such devices (e.g., such as the Tx 101 connecting to the Rx 102). A display 213 (e.g., screen, a display monitor) is connected to the system bus 203 by the adapter 207, which may include a graphics controller to improve the performance of graphics intensive applications and a video controller. Additional input/output devices cab connected to the system bus 203 via the adapter 207, such as a mouse, a touch screen, a keypad, a camera, a speaker, etc.

In one embodiment, the adapters 205, 206, and 207 may be connected to one or more I/O buses that are connected to the system bus 203 via an intermediate bus bridge. Suitable I/O buses for connecting peripheral devices such as hard disk controllers, network adapters, and graphics adapters typically include common protocols, such as the Peripheral Component Interconnect (PCI).

The system memory 204 is an example of a computer readable storage medium, where software 219 can be stored as instructions for execution by the processor 202 to cause the device 201 to operate, such as is described herein with reference to FIGS. 3-4. In connection with FIG. 1, the software 219 can be representative of firmware 190 for the Tx 101, such that the memory 204 and the processor 202 (e.g., the controller 180) logically provide a FIR equalizer 251, an analyzer 252 of in-band communication data, a selector for selecting a ping, a coupler 253 for dynamically determining a coupling factor, a regulator 254 for dynamically determining an operating frequency, etc.

FIG. 3 depicts a method 300 of a system (e.g., the system 100 of FIG. 1) in accordance with one or more embodiments. The method 300 can be executed by the controller 180 after the Rx 102 is presented to the Tx 101 in the space around the Tx 101. Further, the method 300, generally, is an example operation of dynamically determining a coupling and selecting an operating frequency by the controller 180 to minimize interference of load switches.

The method 300 begins at block 310, where the Tx 101 determines a ping. Generally, pings generate voltages between the Tx 101 and the Rx 102. More particularly, the ping from the Tx 101 produces a sinusoidal wave on the coil 110 and causes the Rx 102 to generate power (e.g., a local voltage) out of the rectifier 140. The ping can be selected from one or more coded pings within the controller 180, such the controller 180 can predict a desired voltage according to a selected ping.

At block 330, the Tx 101 sends the ping to the Rx 102. In this way, the ping is transferred from the coil 160 of the Tx 101 to the coil 110 of the Rx 102, which further produces in the rectifier 140 a voltage. Note that the Tx 101 determines frequency of the sinusoidal wave to create enough energy on the Rx 102 to cause the desired voltage while not harming (e.g., burning) the circuitry of the Rx 102. The controller 135, which generally monitors elements of the Rx 102, detects a local voltage in the rectifier 140. This local voltage can be recorded by the controller 135 and is reported to the Tx 101 through in-band communications therebetween.

At block 350, the Tx 101 receives a reported voltage from the Rx 102. The reported voltage being the local voltage detected in the rectifier 140.

At block 370, the Tx 101 dynamically determines a coupling (e.g., a coupling frequency, a coupling distance, and/or a system joint resonance created by the coupling between the Tx 101 and the Rx 102). Note that dynamic determination indicates an active real-time determination of a credential, quality, or the like. A coupling is based on a coupling factor, which is a distance between the Rx 102 and the Tx 101. According to one or more embodiments, the controller 180 of the Tx 101 dynamically determines the coupling by simulating distance conditions based on the reported voltage. Further, the controller 180 can also utilize (whether separately or independently) a look-up table to correlate the reported voltage with the coupling factor. Given a particular coupling, the method 300 can proceed to block 380.

At block 380, the Tx 101 dynamically determines an operating frequency. The operating frequency is dynamically determined to minimize interference of load switches. In this regard, the controller 180 determines the operating frequency that guarantee that during load changes, the system 100 will have stability. In turn, the Tx 101 implements the operating frequency with respect to the transmission of power to the Rx 102.

According to one or more advantages, technical effects, and benefits, the system 100 of FIG. 1, when implementing the method 300 of FIG. 3, ensure very little fluctuation on rectified voltages of the Rx 102, thereby creating stability for the system 100 and eliminating negative outputs for any DC-to-DC converting.

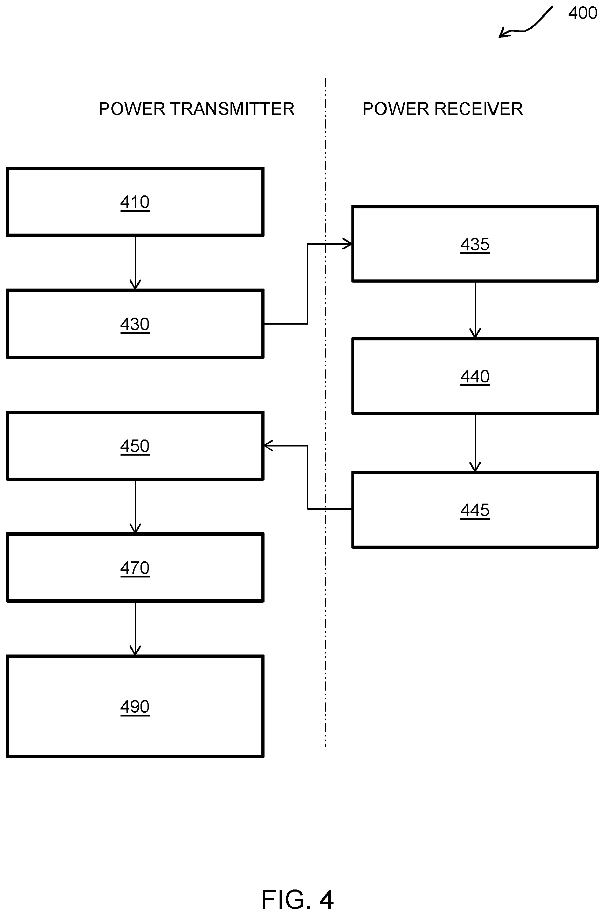

FIG. 4 depicts a method 400 of a system (e.g., the system 100 of FIG. 1) in accordance with one or more embodiments. The method 400 can be executed by the controller 180 after the Rx 102 is presented to the Tx 101 in the space around the Tx 101. Further, the method 400, generally, is an example operation of dynamically determining a resonance (e.g., an operating frequency) by the controller 180 for the system 100. Note, some method operations are performed on the Tx 101 side of the system 100, while other method operations are performed on the Rx 102 side.

In one or more embodiments of the method 400, the operating frequency is selected to be a joint resonance frequency for the system 100 when a highest load is set to a predefined value (e.g., either highest load or typical load). In one or more embodiments of the method 400, the operating frequency is selected to produce a minimal swing of rectified voltages for the full load span 9e.g., a whole range of considered loads). These embodiments can be combined or mixed to derive a preferred operating frequency for each coupling condition considering both a switch load voltage span and a proximity to resonance for active loads.

The method 400 begins at block 410, where the Tx 101 determines a ping. Generally, as described herein, the ping generates a power (e.g., a local voltage) out of the rectifier 140. According to one or more embodiments, the ping can be an initial digital ping invoked by the Tx 101 utilizing a fixed frequency and fixed amplitude or duty cycle. For example the ping can be determined to be or be set at 145khz. The digital ping can refer to a power carrier pulse created by the Tx 101 intended to power the Rx 102 as coupled. The digital ping can be enough to power the Rx 102, while at largest allowable misalignment and while not causing over voltage for the higher coupling situations.

According to one or more embodiments, initial digital ping used for the coupling determination may be selected to provide a minimal Vrect at lowest coupling that is still above operational thresholds of the Rx 102 and a maximal Vrect at highest coupling that is within voltage range of receiver operation (e.g., and would not cause any faults to receiver operation).

According to one or more embodiments, the ping can be selected from one or more coded pings within the controller 180, such the controller 180 can predict a desired voltage according to a selected ping. In an example, the one or more coded pings correspond to one or more desired voltages, such that a selected coded ping renders a particular local voltage that is desired to be reported. Based on whether a reported voltage is correct or close, the Tx 101 can update the coded ping selection.

At block 430, the Tx 101 sends the ping to the Rx 102. In this way, the ping is transferred from the coil 160 of the Tx 101 to the coil 110 of the Rx 102, which further produces in the rectifier 140 a voltage as described herein.

At block 435, the Rx 201 generates a voltage on the rectifier 140. At block 445, the controller 135 of the Rx 201 detects the voltage (e.g., local voltage). At block 445, the Rx 201 reports the voltage through in-band communications (e.g., a reported voltage). According to one or more embodiments, the Rx 102 (e.g., when powered up) measures a Vrect therein (e.g., the local voltage) and reports a value as part of a message back to the Tx 101 (e.g., a reported voltage). The reported value or the reported voltage can be the local voltage multiplied by a fixed factor. The system 100 can implement such a message (e.g., within in-band communications) as a signal strength message or other format.

According to one or more embodiments, the Rx 102 may not report the Vrect. Alternatively, the Tx 101 can determine coupling and operational frequency based on the current or voltage of the coil 160 when a defined digital ping is active. The Rx 102, in turn, provides a fixed load at least for a predefined period of time when power carrier is present.

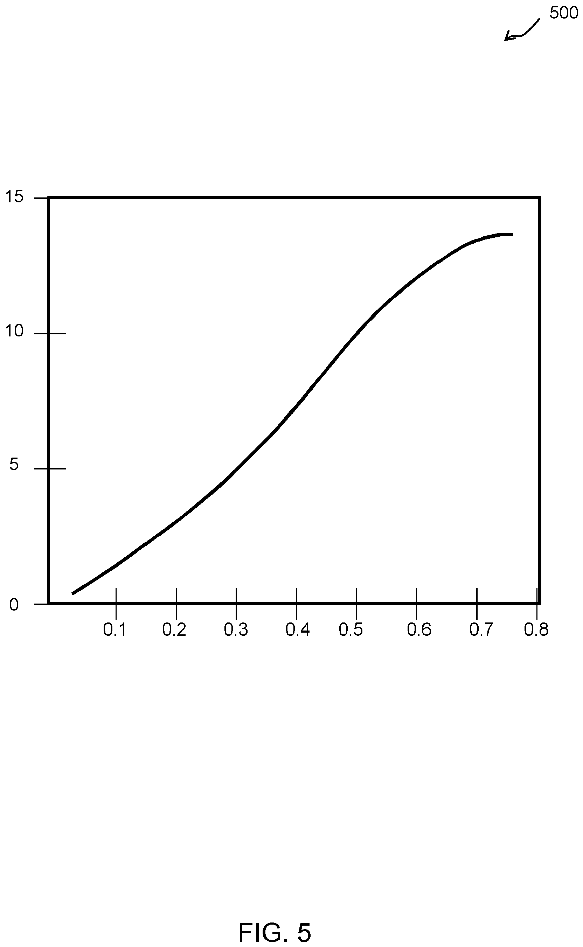

At block 450, the Tx 101 receives a reported voltage from the Rx 102. The reported voltage being the local voltage detected in the rectifier 140. At block 470, the Tx 101 dynamically determines a coupling. According to one or more embodiments, the Tx 101 can then derive a coupling factor based on received signal strength (e.g., the reported voltage). For instance, the association between a specific Vrect voltage to a coupling factor is monotonic and can be derived computationally and/or empirically. FIG. 5 shows a graph 500 in accordance with one or more embodiments. The graph 500 shows a curve reflecting a Vrect vs. a coupling factor with respect to a simulation of a relation for the system 100 with resonance frequencies of the Rx 102 and the Tx 101 set to 100khz and ping sent at 145khz. According to one or more embodiments, the association can be expressed as a table included in the firmware 190 of the controller 180 of the Tx 101. The table can also provide a direct association between the reported Vrect via signal strength to the preferred operational frequency any duty cycle and/or amplitude initial value and maximal and minimal limits.

At block 490, the Tx 101 dynamically determines an operating frequency and implements the operating frequency with respect to the transmission of power to the Rx 102. According to one or more embodiments, once receiving the reported voltage (e.g., the initial signal strength message), the Tx 101 can shut down the power carrier and invoke operation at the preferred frequency (e.g., determined operating frequency). According to one or more embodiments, the Tx 101 can also continue operation without interruptions and adopt the carrier frequency during operation to the preferred frequency.

According to one or more embodiments, the Rx 102 can operate at a range of Vrect voltages that is not very narrow (e.g., greater than 15% of a typical voltage). Operating at this range can be achieved even for systems that use fixed voltage supply and include a DC-to-DC convertor as part of a design for the Rx 102. For such systems, the Tx 101 may keep a fixed operational point (e.g., frequency and amplitude/duty cycle) through all operation time regardless of when the load is present, as a maximal load switch is confined and within the Vrect range of operation for the Rx 102. In a specific case, there may not be a need for any ongoing communication from the Rx 102 to the Tx 103 to adopt operational point as described herein.

According to one or more embodiments, the self-resonance of a transmitter resonance circuit including a transmitter coil and a resonance capacitor is selected. The self-resonance of a receiver resonance circuit including a secondary coil and a resonance capacitor is also selected, but to be a different frequency. The resonance frequency of the Rx 102 is typically higher than resonance frequency of the Tx 101. Operational frequencies designed for all coil to coil gaps are at frequencies higher than the resonance frequency of the Rx 102. The transmitter frequency is selected such that the impedance of the transmitter resonance circuit at the lowest operational frequency (e.g., which for large coil to coil gap is typically close to receiver resonance frequency) provides for effective limitation of maximal current of transmitter to match maximal current capability of transmitter circuit, but sufficient current to induce the required voltage on the secondary at maximal designed coil to coil separation.

According to one or more embodiments, when the Rx 102 and the Tx 101 are installed at fix gap and alignment, a coupling between the Rx 102 and the Tx 101 can be fixed and can be derived (e.g., computationally or experimentally). Further, a preferred operation frequency can then be selected based on the methodology described herein. Given some switching is still expected due to load changes, the operational point can be adopted by means of carrier duty cycle modifications or drive voltage amplitude modification, while maintaining operation at the preferred frequency. Note that a lower duty cycle can lead to a lower energy transfer, as will a lower driving voltage. For a system were the alignment between the Tx 101 to the Rx 102 is not fixed and may vary, the controller 180 can derive the current coupling is required to select the appropriate frequency of operation.

As indicated herein, embodiments disclosed herein may include apparatuses, systems, methods, and/or computer program products at any possible technical detail level of integration. The computer program product may include a computer readable storage medium (or media) having computer readable program instructions thereon for causing a controller to carry out aspects of the present invention.

The computer readable storage medium can be a tangible device that can retain and store computer readable program instructions. The computer readable storage medium may be, for example, but is not limited to, an electronic storage device, a magnetic storage device, an optical storage device, an electromagnetic storage device, a semiconductor storage device, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The computer readable program instructions described herein can be communicated and/or downloaded to respective controllers from an apparatus, device, computer, or external storage via a connection, for example, in-band communication. Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

The flowchart and block diagrams in the drawings illustrate the architecture, functionality, and operation of possible implementations of apparatuses, systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the flowchart and block diagrams in the drawings. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used herein, specify the presence of stated features, integers, steps, operations, elements, and/or components, but do not preclude the presence or addition of one more other features, integers, steps, operations, element components, and/or groups thereof.

The descriptions of the various embodiments herein have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

**Claims**

1. A power transmitter executing in-band communication with a power receiver, the power transmitter configured to:

   receive a reported voltage from the power receiver;
   dynamically determine a coupling between the power transmitter and the power receiver from the reported voltage; and
   dynamically determine an operating frequency for power transmission between the power transmitter and the power receiver.

2. The power transmitter of claim 1, wherein the power transmitter is further configured to determine a ping that causes a local voltage in the power receiver, the reported voltage corresponding to the local voltage.

3. The power transmitter of claim 2, wherein the power transmitter comprises a coil, and the ping is transferred from the coil to a coil of the power receiver to generate the local voltage at a rectifier of the power receiver.

4. The power transmitter of claim 3, wherein the ping from the power transmitter produces a sinusoidal wave on the coil of the power transmitter that causes the power receiver to generate the local voltage out of the rectifier in the power receiver, a frequency of the sinusoidal wave creates enough energy on the power receiver to cause the local voltage.

**5.** The power transmitter of any of claims 2-4, wherein the power transmitter comprises a controller, and wherein the ping is selected by the controller from one or more coded pings there within.

**6.** The power transmitter of any preceding claim, wherein the power transmitter comprises a controller, and wherein the dynamic determinations of the coupling and the operating frequency are active real-time determinations by the controller.

**7.** The power transmitter of any preceding claim, wherein the power transmitter maintains a fixed operational point through an operation time.

**8.** A power receiver executing in-band communication with a power transmitter, the power receiver configured to:

receive a ping that causes a local voltage in the power receiver;
report the local voltage as a reported voltage to the power transmitter to cause a dynamic determination of a coupling between the power transmitter and the power receiver from the reported voltage and a dynamic determination of an operating frequency for power transmission between the power transmitter and the power receiver.

**9.** The power transmitter of any of claims 1-7 or the power receiver of claim 8, wherein the dynamic determination of the coupling is based on a coupling factor identifying a distance between the power receiver and the power transmitter.

**10.** The power transmitter of claim 9, wherein the power transmitter utilizes a look-up table to correlate the reported voltage with the coupling factor.

**11.** The power transmitter of any of claims 1-7 or the power receiver of any of claims 8-10, wherein the dynamic determination of the coupling is based on simulating distance conditions based on the reported voltage.

**12.** The power transmitter of any of claims 1-7 or the power receiver of any of claims 8-11, wherein the dynamic determination of the operating frequency selects a frequency that guarantees stability between the power receiver and the power transmitter.

**13.** The power transmitter of any of claims 1-7 or the power receiver of any of claims 8-12, wherein the operating frequency minimizes interference of load switches at the power receiver.

**14.** The power transmitter of any of claims 1-7 or the power receiver of any of claims 8-11, wherein the dynamic determination of the operating frequency selects a frequency at a joint resonance frequency when a highest load is set to a predefined value.

**15.** The power transmitter of any of claims 1-7 or the power receiver of any of claims 8-11 or 14, wherein the operating frequency is selected at a frequency that produces a minimal swing of rectified voltages for a range of loads.

FIG. 1

200

201

204

219

| 251 | 253 |
| 252 | 254 |

203

205

202

206

207

212

213

FIG. 2

METHOD
300

```
┌─────────────────────────────┐
│             310             │
└─────────────────────────────┘
               │
               ▼
┌─────────────────────────────┐
│             330             │
└─────────────────────────────┘
               │
               ▼
┌─────────────────────────────┐
│             350             │
└─────────────────────────────┘
               │
               ▼
┌─────────────────────────────┐
│             370             │
└─────────────────────────────┘
               │
               ▼
┌─────────────────────────────┐
│             380             │
└─────────────────────────────┘
```

FIG. 3

400

POWER TRANSMITTER

POWER RECEIVER

410

430

450

470

490

435

440

445

FIG. 4

500

FIG. 5

Europäisches
Patentamt

European
Patent Office

Office européen
des brevets

# EUROPEAN SEARCH REPORT

Application Number

EP 21 16 0611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 3 364 521 A1 (LG INNOTEK CO LTD [KR]) 22 August 2018 (2018-08-22)<br>* the whole document * | 1-14<br><br>15 | INV.<br>H02J50/12<br>H02J50/80 |
| Y | GB 2 502 903 A (MURATA MANUFACTURING CO [JP]) 11 December 2013 (2013-12-11)<br>* the whole document * | 15 | |

TECHNICAL FIELDS
SEARCHED (IPC)

H02J
H04B

The present search report has been drawn up for all claims

| Place of search | Date of completion of the search | Examiner |
|---|---|---|
| Munich | 29 June 2021 | Annibal, Stewart |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 16 0611

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2021

| Patent document cited in search report | | Publication date | Patent family member(s) | | Publication date |
|---|---|---|---|---|---|
| EP 3364521 | A1 | 22-08-2018 | CN | 108337921 A | 27-07-2018 |
| | | | EP | 3364521 A1 | 22-08-2018 |
| | | | KR | 20170045046 A | 26-04-2017 |
| | | | US | 2018351391 A1 | 06-12-2018 |
| | | | WO | 2017065526 A1 | 20-04-2017 |
| GB 2502903 | A | 11-12-2013 | CN | 103477534 A | 25-12-2013 |
| | | | GB | 2502903 A | 11-12-2013 |
| | | | JP | 5590237 B2 | 17-09-2014 |
| | | | JP | 5871034 B2 | 01-03-2016 |
| | | | JP | 2014212697 A | 13-11-2014 |
| | | | JP | WO2012172929 A1 | 23-02-2015 |
| | | | US | 2014009002 A1 | 09-01-2014 |
| | | | WO | 2012172929 A1 | 20-12-2012 |

EPO FORM P0459

For more details about this annex : see Official Journal of the European Patent Office, No. 12/82

**EP 3 876 389 A1**